# EUROPEAN PATENT SPECIFICATION

(11) **EP 3 029 796 B1**
(45) Date of publication and mention of the grant of the patent: **27.11.2019**
(21) Application number: 15152202.6
(22) Date of filing: 22.01.2015
(51) Int. Cl.: H02J 3/14

(54) **Container for housing electrical components and managing electric loads**
Behälter zur Aufnahme elektrischer Bauteile und zur Verwaltung von elektrischen Lasten
Récipient pour le logement des composants électriques et pour la gestion des charges électriques

(30) Priority: 03.12.2014 IT MI20142078
(43) Date of publication of application: 08.06.2016
(73) Proprietor: Microdevice S.r.l., 25020 Flero (BS) (IT)
(72) Inventor: Abrami, Claudio, I-25020 Flero BS (IT)
(74) Representative: Marietti, Andrea

(56) References cited:
- EP-A1- 1 503 474
- EP-A1- 2 372 861
- GB-A- 2 244 605
- JP-A- H10 208 829
- US-A1- 2009 018 706

## Description

### Field of the Invention

The present invention relates to a container for housing electrical components for automatizing the operation of electric loads for domestic use, and in particular for managing electric loads connected thereto.

### Background of the Invention

It is known art realizing containers for wirings to whom electric loads are connected as integrated or constrained to the container, mainly constituted by light sources and power outlets, as well as one or more switches for such electric loads. The containers known in the art are usually constituted by metallic boxes, optionally provided with a lid hinged at a recess or compartment thereof, by tubular ducts or, uncommonly, by metal section bars.

For example, Japanese Patent JP H10-20208829 in the name of INNAN HOWAN, discloses an assembly for housing electrical components comprising a section bar adapted for containing an electrical wirings connected to electric power supply outlets arranged on a slidable lid arranged so that to shield the recess of the section bar itself, as well as necessarily connected to an outer power supply line. The substantially U-shaped section bar of such an INNAN HOWAN's patent, is shaped to be able to be inserted into a recess obtained in the wall of a room, with its own cavity facing inward the room in which it is placed.

Such a Patent JP H10-208829 does not provide for means controlling the power supply of wirings placed inside the section bar, nor does it provide for the housing of controlling means to manage electric loads outside the section bar itself.

The French Patent Application FR 2 806 280, in the name of CYRIL, relates to a container for electrical components for domestic use, having walls constituted by hollow section bars shielded by suitable lids, which are able to house wirings, switches and respective electric loads, such as lamps and power outlets.

The CYRIL's container does not provide for the housing of controlling means for electric loads outside the container itself.

In addition, neither the CYRIL application, nor the INNAN HOWAN's application teach to employ a section bar for housing electrical components for automatizing the operation of electric loads, such as for example controlling means for managing electric loads connected to the same section bar.

US 2009/0018706 discloses a system for controlling electricity consumption of an electricity consumer having a plurality of loads. The power consumption of the loads is monitored by a main central processing unit and, when needed, the controller interrupts feeding of electric power to some of the loads, as a function of a set of rules provided by the user.

Note that herein and in the following, by "controlling means" any device is meant as adapted to adjust, preferably automatically and/or upon one or more commands given by the operator, the voltage and/or intensity of the current circulating on a line directed to an electric load.

Herein and in the following, by "electric load" any electrically powered device or arrangement is meant, which carries out its own and well defined function inside a domestic electrical system. Therefore, electric loads can be, for example, a light source, equipments provided with electric motors, such as for example rolling shutters or motorized blinds or fans, heating and/or conditioning apparatuses, alarm systems. For the sake of description simplicity, herein and in the following the definition of "electric load" will be used also for the power outlets arranged on the container, which are adapted to power supply outside consumptions.

Furthermore, the domestic electrical systems provided with said containers for housing electric components, suffer from the drawback of total switch-off of electric power when exceeding a maximum value of absorbed electric power. It is known in fact that the electric power is delivered to several dwellings so that every dwelling can absorb an electric power lower than a certain maximum value, in order to avoid an overload of the electric power station. Such a maximum value of electric power is generally set depending on the type of contract the user drew up with the company providing the electrical service.

Once such a maximum value (for example 3 kW for dwellings wherein electric loads without particularly high absorption are not present) has been exceeded, the meter completely interrupts the electrical current passage towards all consumptions inside the dwelling. In addition to being potentially dangerous and/or damaging for some typologies of loads, such an interruption is also bothersome for the user which will have to manually disconnect some electric loads before enabling again the meter and allowing the operation of the remaining electric loads inside the dwelling.

### Summary of the invention

It is an object of the present invention to make a container for housing electrical components for automatizing the operation of electric loads for domestic use which, by substantially integrating the whole assembly of devices and wirings needed for controlling the electric loads outside or integrated to such a housing, can be easily installed and fitted to various needs, aesthetics as well, rising in a domestic environment and which is of practical and immediate use in any dwelling environment.

It is a further object of the present invention to provide such a container and a method for controlling a domestic electrical system able to avoid a total electric power switch-off caused by the meter due to an overload of absorbed power.

These objects and others are reached by a container, an electrical system and a method according to the independent claims. Preferred aspects are indicated in the respective independent claims.

In particular, according to an aspect of the present invention, a container for housing electrical components for automatizing the operation of electric loads for domestic use, comprises a recess containing one or more electrical wirings for the power supply and controlling means to control the power supply of at least part of the electrical wirings.

Furthermore, the container comprises at least one input line of the electric power, as well as one or more electric loads connected to the wirings and constrained, or integrated, to the container. In particular, the container comprises at least one output line from the container itself, to power supply at least one electric load to the housing container. The controlling means comprise at least one detector of the electric power absorbed individually by at least one of the loads, and at least one processor to control the supply of electric power to at least one of the loads, depending on the detection of the power absorbed by each of the loads.

Thanks to the present invention, therefore, the container is able to detect the instant situation of the power absorbed by the various loads and, depending on this, to drive the supply to the latter. In particular, if the sum of the power absorbed by the loads of the container exceeds a given threshold, the processor decides which loads to keep active, and to which loads the electric power supply has to be interrupted. Such a decision depends on the absorption detected for each load. In other words, the electric absorption of the various loads is inputted into the processor and, depending on this, the latter processes a load priority. The processor keeps connected the higher priority loads and disconnects the lower priority loads, while ensuring that the sum of the powers absorbed by the various loads remains lower than a given threshold value.

According to an aspect of the present invention, the processor is able to logically subdivide the electric loads in at least two groups, and each group comprises at least one electric load. Accordingly, the detector (typically a plurality of detectors) detects the electric power absorbed individually by the load groups, and the processor drives the supply of electric power to each of the groups, depending on the detection of the power absorbed by the latter.

The detection of the absorbed power can thus not be carried out for every single load, but globally for load groups. For example, the processor of a container, to which thirty electric loads can be connected, can divide the loads in ten logical groups of three loads each. The detector can thus monitor the power absorbed individually by the ten load groups.

Preferably, the loads having the same importance, or functionally connected one to another, are grouped in a single group. Furthermore, the controller preferably drives the power supply to the various groups, therefore loads of the same group are all kept active, or all inactivated by the controller.

The load groups can further have different numbers of loads one from another.

Furthermore, the supply control accuracy is preferably the same as the detection accuracy. Therefore, if the power absorbed individually by each load is detected, the electric power supply is preferably controlled individually for each load. Conversely, if the power absorbed individually by groups of loads is detected, the electric power supply is preferably controlled for the individual groups. However, the possibility is not excluded of having accuracy in driving electric power supply different from the detection accuracy. For example, the absorbed electric power of a group of loads can be detected, and the electric power supply can be individually controlled for the loads of a same group.

According to a further aspect of the present invention, the container comprises at least one removable lid for the respective recess.

Such an aspect allows easily reaching and inspecting the inside of the container.

Furthermore, according to a preferred aspect of the present invention, the aforesaid container comprises a concave section bar preferably constituted by a section bar made of aluminum, steel or plastic material, shaped for housing the wirings and controlling means thereof inside its own recess, and outside its own recess the various electric loads, such as light sources or power outlets or terminals for transferring electric signals, integrated or integral with such a section bar.

The use of a preferably metallic section bar is extremely effective since such a section bar can serve, due to its mechanical features, also as a structural element inside a dwelling, without the need of integrating the same in masonry.

According to another aspect of the present invention, such a section bar can comprise at least one removable lid for protecting or shielding the recess of the section bar itself, intended for both allowing the easy access to electrical components housed therein and increasing the use flexibility of the section bar itself in the various environments in which it has to be installed.

In fact, the removability of the lid, conveniently shaped and provided with proper aesthetic appearance, substantially implies its possible replaceability depending on the aesthetic needs of the site in which such a section bar has to be installed.

According to a further aspect of the present invention, the container has a column shape.

Such a shape is particularly effective and allows making the container aesthetically suited for the insertion thereof, for example, in a dwelling room.

Another aspect of the present invention relates to an electrical system comprising a plurality of containers according to one or more of the above aspects, and a detector of the electric power absorbed individually by at least one load, or group of loads, or container, and at least one processor for controlling the electric power supply to at least one of the loads of at least one of the containers, depending on the detection of the power absorbed by each load, or each load group, or each container.

In other words, an electrical system according to the present invention comprises a plurality of containers, and the loads handling is carried out independently among the various containers. Therefore, the electrical system comprises a processor driving the power supply to the various electric loads of the various containers, depending on the electric power absorbed by the loads of all the containers.

The electric power detection can be carried out for every single load of all the containers. Such a solution has high accuracy, since it allows carrying out a precise check on the absorption of every individual load.

Alternatively, in different embodiments, the loads of the various containers can be divided logically in several groups. In this case, the overall power absorbed by each group is detected. The loads belonging to a group are preferably connected to the same container. However, the possibility is not excluded of load groups comprising loads belonging to different containers. Furthermore, each group of loads can be correspond to an individual container. In this case, thus, the at least one detector detects the electric power absorbed by each container, without detailed information on the absorption of individual loads of each container. Such embodiments are simpler and cheaper, although less accurate.

In addition, according to the present invention, a method for controlling an electrical system according to one or more of the above aspects, comprises the steps of:
a) detecting the electric power absorbed individually by one or more of said loads, or groups of loads, or by said containers;
b) setting the priority of electric loads or groups, depending on the power detection of step a)
c) controlling the supply of electric power among the loads, or groups of loads, or containers of said electrical system, depending on said priority.

As mentioned, the accuracy of the detection of the power absorbed during step a), can vary among the different embodiments of the present invention.

Similarly, the decision about the priority of electric loads can be different in different embodiments of the present invention.

For example, in an embodiment, the controller can be programmed to drive the electric power supply to the loads (or groups of loads, or containers) with higher absorption only, until reaching a given threshold. Alternatively, the controller can be programmed to drive the electric power supply to the highest possible number of loads, i.e. to the loads having the lowest absorption, etc.

In general, the controller drives the electric power supply to the various consumptions depending on the electric power absorption thereof, detected through the respective detector.

### Brief Description of the Drawings

For illustration purposes only, some embodiments of the present invention will be described referring to the accompanying figures, wherein:
- figure 1 is a perspective view of a container, according to a preferred embodiment of the present invention, wherein the housing container of the electrical components has a column shape;
- figure 2 shows a sectional view of a container for electrical components comprising a section bar and two peculiar covering elements for the recesses of such a section bar, according to a particular aspect of the present invention;
- figure 3 shows a sectional view of a container for electrical components comprising the same section bar of figure 2, but shaped with one lid only for the recess of the section bar;
- figure 4 is a partial perspective view of a container for housing electrical components, according to another aspect of the present invention, comprising a section bar of the type shown in figures 2 and 3;
- figure 5 is a partial perspective view of a container according to another aspect of the present invention; and
- figure 6 is an exploded schematic view of a particular configuration of a container according to a particular aspect of the present invention;
- figure 7 is a plan view of a particular embodiment of an electrical system comprising a plurality of containers according to the present invention.

### Implementation modes of the invention

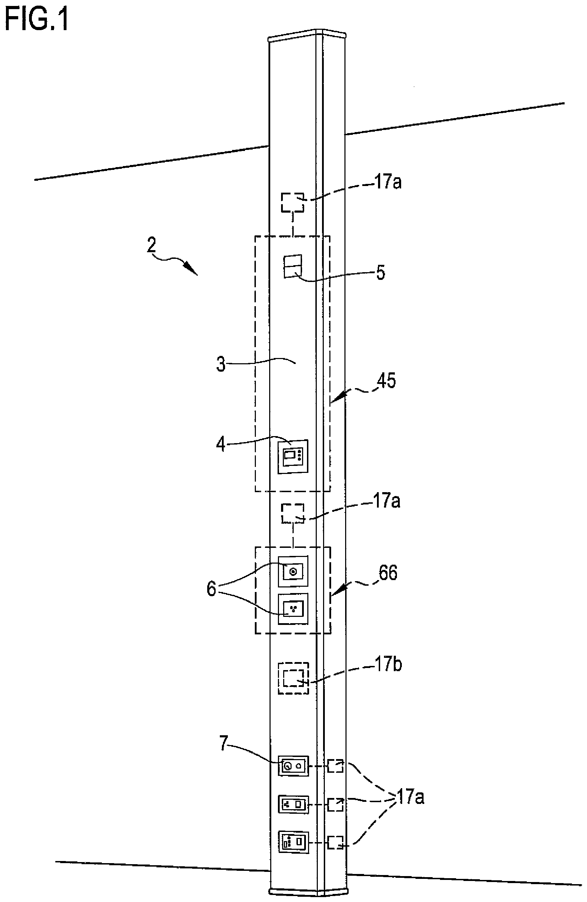

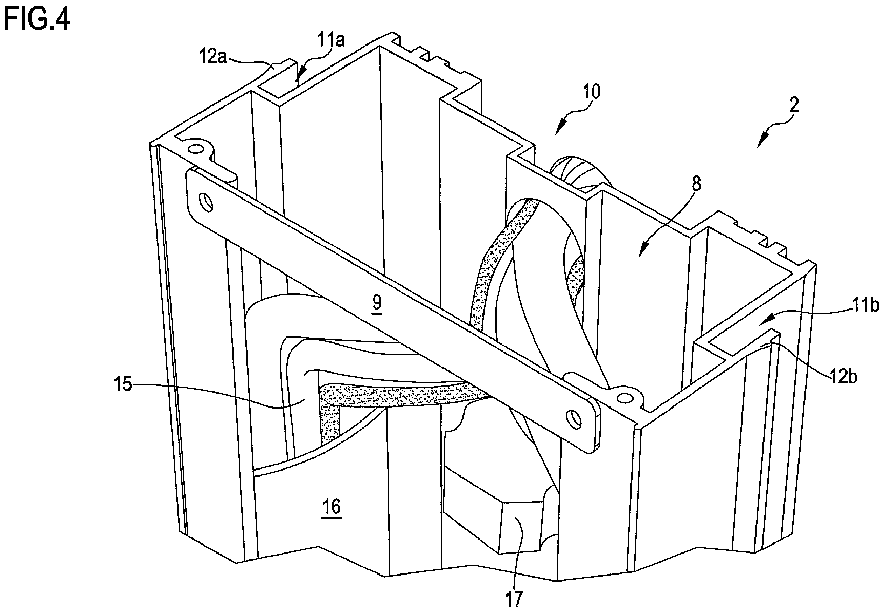

As shown in particular in figures 1 to 4 the container 2, for housing electrical components for automatizing the operation of domestic electric loads, is preferably constituted by a section bar 2 having a constant section, provided with at least one lid 3 and comprises a recess 8 in which one or more electrical wirings 15 are housed and connected to at least one input line for the electric power supply (not shown in detail), as well as controlling means 17 for the adjustment, preferably assisted or automated, of the voltage and/or intensity of current circulating in at least part of said wirings 15.

Such controlling means 17, as already mentioned above, can preferably be constituted by one or more programmable controllers implementing a convenient processor able to adjust the operation of one or more electric loads, for example by means of the connection to at least one line for transferring instructions (or instruction "bus") connected to the actuator, or actuators, intended for the operation of the aforesaid electric loads. Such controlling means, as known in the art, can have one or more control panels 4 for the instruction inputs by the user.

In addition, the container 2 connects to one or more electric loads 4, 5, 6, 7 which can be external, integrated or constrained to the container itself, or the respective lid 3, and connected to the wirings 15. Such electric loads can be constituted by not only the control panel 4, possibly provided with respective instrumentation and controlling means 17, but also, for example, by light sources (not indicated), by sensors 5, for example sensing the environmental conditions, by consumptions connected to electric power outlets 7, by terminals 6 for mono- or bi-directionally transferring data in digital or analogical form, etc. For ease of visualization, such consumptions are not shown, and the electric load of such consumptions is identified by the outlets 7.

The container 2 further has at least one output electric line adjusted by the controlling means 17 and connectable, for example through a pre-existing electrical system or a dedicated wiring, to at least one external electric load, for example constituted by a motorized equipment for moving rolling shutters or blinds, or by a thermo-regulating system (heating and/or conditioning) for thermo-regulating one or more rooms, or by an alarm system, or by one or more light sources, power outlets (possibly remotely adjusted), etc.

Such an output line for example can be a power cable of an electric load directly driven by the controlling means 17.

In other words the container 2 can supply at least one electric load directly connected or constrained to the container itself and/or at least one external electric load connected to the wirings 15 of the container by means of one or more power outlets 7 or by means of at least one electric line outputting from said container.

The controlling means 17 further comprise at least one detector 17a of the electric power individually absorbed by at least one of the loads connected to the container 2, and at least one processor 17b to drive the supply of electric power to at least one of said loads, depending on the detection of the power absorbed by each of said loads.

For example each outlet 7 shown in figure 1 is preferably connected to a detector 17a (for example an ammeter) of the electric power absorbed by the electric load connected thereto. Each detector 17a is connected to one or more processors 17b for determining the power absorbed by one or more electric loads connected to the respective electrical outlets 7 and/or to one or more outputting electric lines.

In the embodiment here described in the figures, the container 2 is provided with a single processor 17b and with a detector 17a of the electric power for each electrical outlet 7. Each detector is electrically connected to the processor for allowing the latter to determine the electric power absorbed by the electric loads 4, 5, 6, 7.

Further electric power detectors can be for example connected to at least one line outputting from the container 2 and/or to at least one load 4, 5, 6 constrained to the container 2.

In an embodiment, all the loads are connected to a detector 17b so that to detect the electric power absorbed individually by each load 4, 5, 6, 7.

In an alternative embodiment, the processor logically subdivides the electric loads in at least two groups of electric loads. Each group comprises at least one electric load and at least one detector of the electric power absorbed individually by each group of loads.

This embodiment is useful for example in case a high number of consumptions are present within the dwelling. In this way the loads can be thus subdivided in groups and the overall electric power absorbed by each load group can be detected.

For example in the embodiment shown in figure 1, the loads 4, 5 and 6 are grouped so that to form two groups 45 (comprising the control panel 4 and the sensors 5) and 66 (comprising the terminals 6), symbolically indicated by dashed rectangles. With each group of loads 45, 66 a power detector 17a is preferably associated also being connected to the processor 17b.

In a preferred embodiment, an electrical system 1 comprises a plurality of containers 2, for example positioned in different rooms of a dwelling.

In such an embodiment, the various containers 2 can be advantageously connected one to another and, in particular, to implement a data network and to transmit and share the values of absorbed power detected by each container.

In case the electrical system 1 comprises at least two containers 2, a further embodiment of the container 2 is provided in which all the loads connected to the container are grouped so that to belong to a single group. In this latter case the power detectors 17a detect the overall electric power absorbed by the containers 2.

In general, a power detector is preferably associated with each load or group of loads, to detect the overall electric power absorbed by the load or group of loads.

In this way a processor, preferably a processor of one of the containers 2, can receive as an input the power absorbed by the loads connected also to the other containers 2.

Therefore the processor 17b, once determined the electric power absorbed by each electric load 4, 5, 6, 7 and/or by each group 45, 66 of loads, can for example enable and/or disable the electric power supply to one or more loads and/or groups of loads connected to the container.

In particular, the processor 17b compares the sum of the electric power values detected by one or more power detectors 17a with the value of the maximum power allowed and sets a priority among the loads or groups of loads depending on the detected power values.

For example, in an embodiment the processor can for example associate a high priority level with the loads and/or groups of loads having the highest electric power absorption in a certain time and drive the electric power supply to the loads (or groups of load, or containers) only having the highest absorption, until reaching a given threshold.

Alternatively, the processor can be programmed to drive the electric power supply to the highest possible number of loads, i.e. to the loads having the lowest absorption.

Furthermore, alternatively the processor can disable the load more recently connected to the container in case the sum of the powers detected by the power detectors is close to the maximum value of allowed power.

Therefore, depending on the value of power absorbed by the entire dwelling, the processor will adapt the priority levels so that to avoid the overall switch off of the electrical system.

The compactness of the container 2 and its possible adaptability to pre-existing electrical systems, make the installation thereof highly comfortable for the electrical technician, also in variable number within the same domestic dwelling. The ease of application of the container 2 to a pre-existing electrical system, due to the integration inside thereof of all the components required for adjusting one or more inside and outside electric loads belonging to the electrical system 1, makes the latter highly flexible and convenient to be used in any dwelling.

As mentioned above, in a preferred embodiment of the present invention, the container 2 can be constituted by a concave section bar provided with at least one recess 8 in which the electrical components 4, 5, 6, 7, 15, 17 can be housed, by means for example of brackets (not shown), mounting bracket 9 and bulkheads 16.

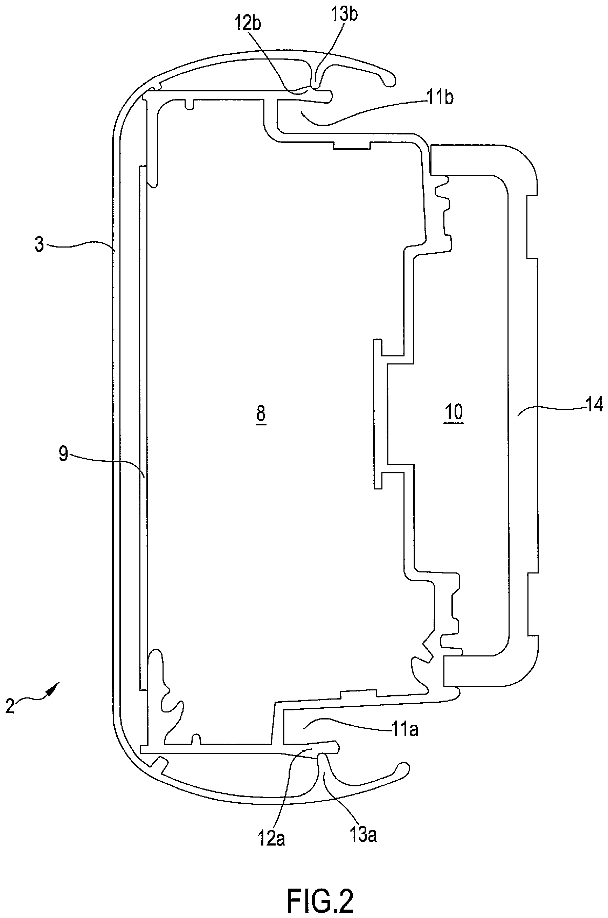

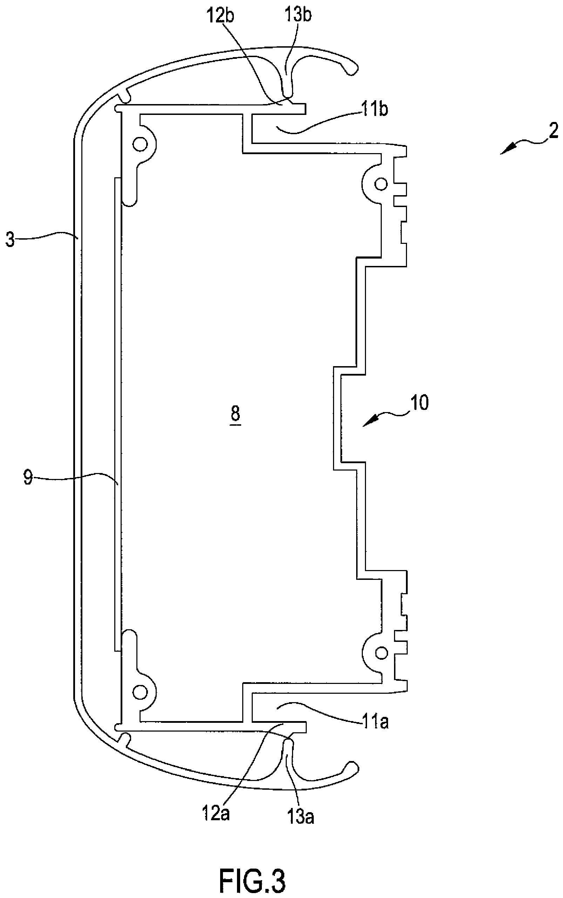

Referring to figures 2 and 3 such a section bar, which can be preferably made of metallic material (for example it can be extruded from aluminum or steel) or plastic material, is provided as well with at least one lid 3 intended to shield, i.e. protect, the recess 8 of the section bar itself. The lid 3 is of a removable type and can be "latched" on the section bar, i.e. by temporary plastic deformation of the lid 3 itself, at suitable latching means 12a, 12b, 13a, 13b with which the lid 3 and the section bar are jointly provided.

In particular, such latching means can provide engaging bosses 12a, 12b made on an outer wall of the section bar and corresponding coupling teeth 13a, 13b made on complementary inner walls of the lid 3.

As mentioned, the possibility of easily removing, and thus replacing, the lid 3 of the section bar allows the electrical technician to provide, in any environment, the same section bar and to select the lid 3 most adequate, by shape and aesthetic appearance, to the environment wherein the installation occurs. The removability of the lid 3 further allows a simple maintenance of the electrical components arranged inside the recess 8 of the section bar.

The section bar, according to another preferred aspect of the present invention, further comprises a longitudinal channel 10 extending from the part opposite to the recess 8, and which can preferably contain light sources (not shown), such as for example light emitting diodes (LED), adjusted by the controlling means 17, or other electric loads, such as for example sensors of the thermodynamic conditions of the environment.

The longitudinal channel 10, which can extend parallel to the recess 8 in the section bar, especially when used to contain light sources, can be protected by a covering element 14, preferably transparent or semitransparent, also of removable type.

The section bar illustrated in figures 2-4 further comprises auxiliary channels 11a, 11b arranged laterally to the channel 10 and intended for the latching of other electric loads, such as for example additional light sources, sensors, or others.

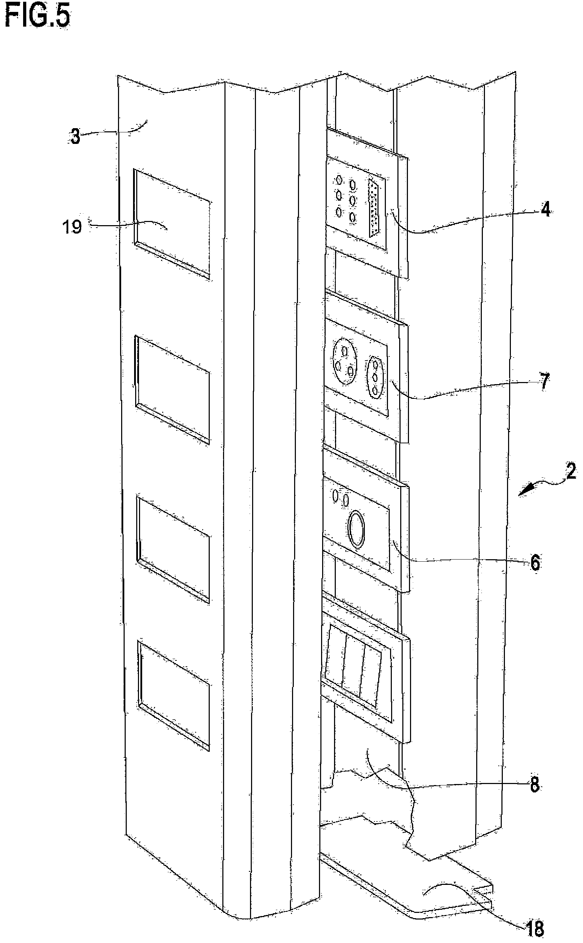

Figure 5 shows a particularly advantageous aspect of the present invention, consisting in the implementation of openings 19 to allow a user to access to the electric loads 4, 6, 7 housed within the recess 8 of the container 2 constituted, in the embodiment of such a figure 5, by a section bar supported by a support 18 and having a column shape.

Note that, as already mentioned, the use of a section bar as a container for the electrical components preferably of a domestic automation system is particularly advantageous, since it is a structurally stable element that can be installed in any environment without the need of carrying out heavy masonry works.

Such openings 19 are preferably realized on the afore said removable lid 3 so that the possible replacement of the lid 3, for example for aesthetic reasons, does not result in the required re-installation of the afore said electric loads 4, 6, 7 of the container 2.

Note that the container 2 not only simplifies the installation of the electric loads in a domestic automation system, making any masonry work not needed for the installation of the different electric loads and controlling means 17, but rather allows the highest use flexibility due to its functional, but also aesthetic, adaptability, due to both the control integrated in the container 2 of output lines directed to electric loads distributed in the domestic dwelling, and to the possibility of easily varying the aesthetic appearance, thanks to the easy replaceability of the lid 3, which is shaped according to the user desires, and to the possible arrangement thereof in any point of the system.

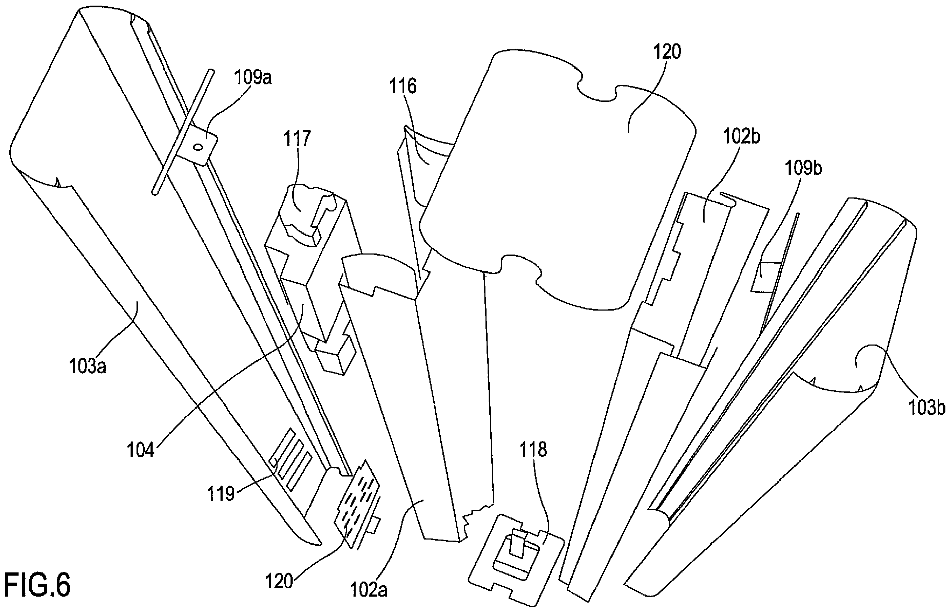

Figure 6 shows a particular configuration of the container 2, comprising two section bars 102a, 102b similar to those illustrated in figures 2-4 and joined together at the wall opposite to the opening of their respective recess, to form a center column retained by a top element 120 and by a base 118 having a suitable shape.

The recess of each section bar 102a, 102b is protected, or shielded, by a respective lid 103a, 103b, of the removable type.

In the recesses of such section bars 102a, 102b, in addition to not illustrated various wirings, electric loads 120, reachable by the user thanks to suitable openings 119 obtained in the lids 103a, 103b of the two section bars 102a, 102b, and controlling means 117 provided with at least one control panel 104 are housed, as well as brackets 109a, 109b and bulkheads 116 delimiting the wirings.

Such a configuration of the container 2, according to a particular aspect of the present invention, as it will be clear for a field technician, is particularly effective and practical in case the installation of multiple electric loads arranged in any position desired by the user inside a dwelling area, is needed.

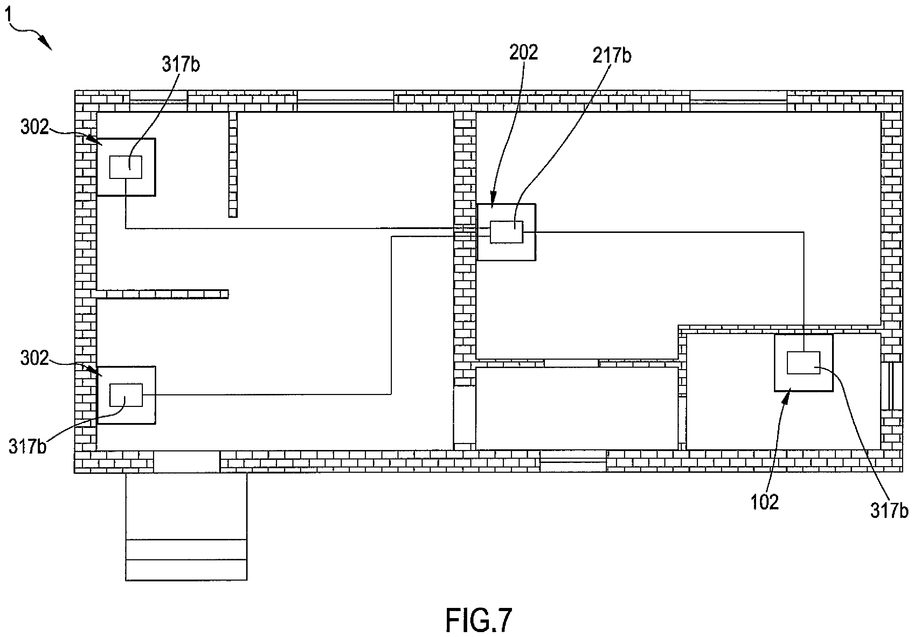

In figure 7 a plan view of an electrical system 1 is shown, comprising a plurality of containers 202, 302 according to the present invention. In the particular shown embodiment, the electrical system 1 comprises four containers 202, 302 preferably positioned in different rooms of a dwelling. One of the containers 202 preferably acts as a "master", whereas the remaining containers 302 act as "slave". In other words, one of the containers 202 (the "master" container) is preferably provided with a processor 217b to drive the electric power supply to the electric loads of the electrical system 1, that is to say both to the electric loads connected to its own container 202 and to the electric loads connected to the remaining containers 102. The remaining containers (the "slave" containers 302) are preferably provided with a processor 317b adapted to interpret the commands of the "master" container.

During the manufacturing step it is not known a priori whether a container is intended for an electrical system, in which it has to play the "master" function, or the "slave" function, or for being the only container in the system itself. In a preferred embodiment, the container 2 is provided with a processor 17b programmed to selectively act as both the master function and the slave function, i.e. it is programmed for both driving the electric power supply to the electric loads on the container 2 (and possibly on other containers in the system), and receiving commands relative to the supply of the loads electric current by a control unit outside the container 2.

In an embodiment of the present invention shown in figure 7, in order to reduce the wirings size (or the interferences in case of wireless modules) each of the slave containers is connected to a single additional container, i.e. the master container 2, which is preferably that one positioned closest to the system center. In particular, the connection among the containers is made by connecting the processors 17b present in each container. The connection can be realized, for example, by means of a network cable and/or by means of suitable wireless communication modules.

In use, a container 2 initially detects the electric power absorbed by the electric loads 4, 5, 6, 7 connected thereto, by means of the detector (or detectors) 17a.

As mentioned, such detection can be carried out individually for each load, or else individually for groups of loads.

Referring to figure 1 the detectors, in an embodiment, can detect the power absorbed by the control panel 4, by the sensors 5, individually by the two terminals 6 and individually by each power outlet 7.

Alternatively, the processor 17a can divide the loads in logical groups. Referring again to the example illustrated in figure 1, the processor 17a can create a logical group 66 comprising the two terminals 6, a logical group 45 comprising the control panel 4 and the sensors 5, and three additional logical groups (not shown in detail) each comprising a single power outlet 7. Thus when the processor 17b has as an input the value of the power absorbed by the group 66, the sum of the values of the power absorbed by the two terminals 6 is inputted in the processor.

Afterwards, the processor 17b sets a priority for the loads or groups of loads, depending on the power absorbed.

In other words, the processor 17b sorts the electric loads 4, 5, 6, 7 according to their importance, from the least important to the most important.

Such an operation can occur according to different criteria.

For example, the processor 17b can give higher importance to electric loads absorbing more electric power.

Alternatively, it can be useful conversely giving higher importance to electric loads absorbing less electric power.

Moreover, in a further embodiment, the processor 17b can detect whether an electric load is active (i.e.it has a power absorption higher than a given threshold) or switched off (i.e. it has a zero power absorption, or however lower than a given threshold). The processor 17b can thus give higher importance to electric loads which are active since longer, and lower importance to electric loads which are active since shorter (or switched off).

Other criteria for determining the importance of the electric loads, i.e. the priority, can be used for programming the processor 17b.

For example, the processor 17b can be programmed for assigning a minimum importance to those loads exceeding a given threshold value of power absorption.

In general, once the loads priority has been set, the processor 17b controls the supply of electric power to the loads (or groups of loads).

In particular, when for example the sum of the powers absorbed by all the loads exceeds a given threshold, the processor 17b drives the electric power supply only to the loads having the highest importance, so that to keep active all the loads having the highest importance which allow keeping the sum of the maximum power absorbed within such a threshold.

Referring to the above described examples, in a first embodiment the processor drives the power supply to the loads only having the highest absorption, in such a number to allow keeping the value of such a power absorption lower than a given threshold.

Alternatively, the processor drives the power supply to the loads only having the lowest absorption, so that to ensure the electric power supply to the highest possible number of electric loads.

In a further variation, the processor drives the power supply only to the loads active since longer. In particular, the processor 17b denies the electric power supply to the last activated electric load, which caused the exceeding of the threshold value of the total electric power absorbed by the various electric loads.

The above set-forth process applies, mutatis mutandis, also to the case of an electrical system provided with several electrical containers.

Briefly, the electric power absorbed by the various loads connected to the containers 202, 302 is inputted to a processor 217b. As mentioned, such a processor 217b is preferably the (or a) processor of one of the containers.

Similarly to what described above, the power absorbed individually by each load can be detected, or the loads can be subdivided in several logical groups (possibly also coincident with one or more containers 302, 202).

Then, the processor sets the priority of the electric loads, i.e. it sorts the electric loads by importance and then controls the electric power supply to the electric loads, depending on the set priority.

Referring particularly to the embodiment shown in figure 7, the powers absorbed by the electric loads connected to each slave container 302 are detected by the detectors of each slave container 2 (not shown), processed by each processor 317b and communicated to the processor 217b of the master container 202. The master container is provided, in its turn, with one or more detectors for the electric loads connected to the same master container 202. The processor 217b of the master container 202 sets the priority of the electric loads, depending on the absorbed power detected by the power detectors of the slave containers 302 and the master container 202. Once the priority has been set, the processor of the master container communicates the set priority to the processors of the slave containers in order to control the electric power supply among the loads, or groups of loads, of the electrical system depending on such a priority.

## Claims

1. Container (2) having a column shape for housing electrical components for automatizing the operation of electric loads (4, 5, 6, 7) for domestic use, comprising a recess (8) containing one or more electrical wirings (15) for the power supply, controlling means (17) to control the power supply of at least part of said one or more electrical wirings (15), said container (2) further comprising at least one input line of electric power, as well as one or more electric loads (4, 5, 6, 7) connected to said one or more wirings (15) and constrained, or integrated, to said container (2), said loads (4, 5, 6, 7) being preferably subdivided by the controlling means (17) in at least two groups (45, 46) of electric loads, each group comprising at least one electric load, said container comprising at least one line outputting from said container to supply said at least one electric load to said container, **characterized in that** said controlling means (17) comprise at least one detector (17a) associated with each load or group of loads to detect the overall electric power absorbed by said load or group of loads, and at least one processor (17b) to drive the supply of electric power to at least one of said loads (4, 5, 6, 7), depending on the sum of the electric power values detected by said at least one detector (17a).

2. Container (2) according to claim 1, comprising at least one removable lid (3) for the respective recess (8).

3. Container (2) according to any one of the preceding claims, constituted by a concave section bar.

4. Container (2) according to claim 3, wherein said concave section bar comprises a removable lid (3) for the protection of the recess (8) of said section bar.

5. Container (2) according to any one of the preceding claims, wherein said at least one line, outputting from said container, comprises an electrical outlet (7) to supply at least one electric load outside said container (2).

6. Electrical system (1) comprising a plurality of containers (2, 202, 302) according to one of the preceding claims to house electrical components, and at least one detector (17a, 217a, 317a) of the electric power absorbed individually by at least one load (4, 5, 6, 7), or group of loads (45, 66) connected to said at least one load, and at least one processor (17b, 217b, 317b) to drive the supply of electric power to at least one of said loads (4, 5, 6, 7) of at least one of said containers, depending on the sum of the electric power values detected by said at least one detector (17a).

7. Electrical system (1) according to claim 6, comprising at least one detector (17a, 217a, 317a) of the electric power absorbed individually by at least one plurality of loads, or groups of loads.

8. Method comprising the steps of:
a) providing an electrical system according to claim 6;
b) detecting the electric power absorbed individually by one or more of said loads (4, 5, 6, 7), or groups of loads (45, 66);
c) setting the priority of electric loads or groups, depending on the detection of the power of step a);
d) controlling the supply of electric power among the loads, or groups of loads, depending on said priority;
wherein, during said step c) of setting the priorities, the electric absorption of said loads (4, 5, 6, 7) detected in said step b) is inputted into said processor (17b) of said container (2) of said electrical system (1) and, depending on this, the latter processes said load priority.

9. Method according to claim 8 wherein, during said step d) of controlling the supply, said processor (17b) of said container (2) of said electrical system (1) either:
(i) drives electric power supply to the loads with higher absorption, until reaching a given threshold;
(ii) drives the electric power supply to the highest possible number of loads.

## Patentansprüche

1. Behälter (2) mit einer Säulenform zur Aufnahme von elektrischen Bauteilen zur Automatisierung des Betriebs von elektrischen Lasten (4, 5, 6, 7) für den Hausgebrauch mit einer Aussparung (8), die eine oder mehrere elektrische Leitungen (15) für die Stromversorgung enthält, Steuermittel (17) zum Steuern der Stromversorgung von mindestens einem Teil der einen oder mehreren elektrischen Leitungen (15), wobei der Behälter (2) ferner mindestens eine Eingangsleitung für elektrische Leistung sowie eine oder mehrere elektrische Lasten (4, 5, 6, 7) aufweist, die mit der einen oder den mehreren Leitungen (15) verbunden und mit dem Behälter (2) verbunden oder in diesen integriert sind, wobei die Lasten (4, 5, 6, 7) vorzugsweise durch die Steuermittel (17) in mindestens zwei Gruppen (45, 66) von elektrischen Lasten unterteilt sind, wobei jede Gruppe mindestens eine elektrische Last aufweist, wobei der Behälter mindestens eine Leitung aufweist, die von dem Behälter ausgeht, um die mindestens eine elektrische Last mit dem Behälter zu verbinden, **dadurch gekennzeichnet, dass** die Steuermittel (17) mindestens einen Detektor (17a) umfassen, der jeder Last oder jeder Gruppe von Lasten zugeordnet ist, um die gesamte elektrische Leistung, die von der Last oder der Gruppe von Lasten aufgenommen wurde, zu erfassen, und mindestens einen Prozessor (17b), zum Steuern der Zufuhr von elektrischer Leistung an mindestens eine der Lasten (4, 5, 6, 7) in Abhängigkeit von der Erfassung der Summe der Werte elektrischer Leistung, die von dem mindestens einen Detektor (17a) erfasst werden.

2. Behälter (2) gemäß Anspruch 1, umfassend mindestens einen abnehmbaren Deckel (3) für die jeweilige Aussparung (8).

3. Behälter (2) gemäß irgendeinem der vorhergehenden Ansprüche, der aus einer konkaven Profilstange besteht.

4. Behälter (2) gemäß Anspruch 3, wobei die konkave Profilstange einen abnehmbaren Deckel (3) zum Schutz der Aussparung (8) der Profilstange aufweist.

5. Behälter (2) gemäß irgendeinem der vorhergehenden Ansprüche, wobei die mindestens eine Leitung, die von dem Behälter ausgeht, einen elektrischen Ausgang (7) aufweist, um mindestens eine elektrische Last außerhalb des Gehäusebehälters (2) bereitzustellen.

6. Elektrisches System (1) enthaltend mehrere Behälter (2, 202, 302) gemäß einem der vorhergehenden Ansprüche zur Aufnahme von elektrischen Bauteilen und mindestens einen Detektor (17a, 217a, 317a) für die einzeln von mindestens einer Last (4, 5, 6, 7) oder Gruppe von Lasten (45, 66) aufgenommene elektrische Leistung, der mit der mindestens einen Last verbunden ist, und mindestens einen Prozessor (17b, 217b, 317b), um die Versorgung mit elektrischer Leistung an mindestens eine der Lasten (4, 5, 6, 7) des mindestens einen der Behälter abhängig von der Summe der Werte elektrischer Leistung, die durch den mindestens einen Detektor (17a) erfasst werden, zu steuern.

7. Elektrisches System (1) gemäß Anspruch 6, umfassend mindestens einen Detektor (17a, 217a, 317a) für die elektrische Leistung, die einzeln von mindestens einer Vielzahl von Lasten oder Gruppen von Lasten aufgenommen wird.

8. Verfahren enthaltend die Schritte:
a) Bereitstellen eines elektrischen Systems gemäß Anspruch 6;
b) Erfassen der von einer oder mehreren der Lasten (4, 5, 6, 7) oder Gruppen von Lasten (45, 66) einzeln aufgenommenen elektrischen Leistung;
c) Einstellen der Priorität von elektrischen Lasten oder Gruppen von Lasten in Abhängigkeit von der Erfassung der Leistung von Schritt a);
d) Steuern der Zufuhr von elektrischer Leistung unter den Lasten oder Gruppen von Lasten in Abhängigkeit von dieser Priorität;
wobei, während des Schrittes c) der Einstellung der Prioritäten, die in Schritt b) erfasste elektrische Aufnahme durch die Lasten (4, 5, 6, 7) in den Prozessor (17b) des Behälters (2) des elektrischen Systems (1) eingegeben wird, und abhängig davon der letztere die Priorität der Lasten verarbeitet.

9. Verfahren gemäß Anspruch 8, wobei während Schritt d) der Steuerung der Zufuhr, der Prozessor (17b) des Behälters (2) des elektrischen Systems (1) eines von beiden ausführt:
(i) die Zufuhr elektrischer Leistung an die Lasten mit der höheren Aufnahme steuert, bis ein gegebener Schwellenwert erreicht wird;
(ii) die Zufuhr elektrischer Leistung an die höchstmögliche Anzahl von Lasten steuert.

## Revendications

1. Contenant (2) présentant une forme de colonne destinée à loger des composants électriques pour l'automatisation du fonctionnement de charges électriques (4, 5, 6, 7) pour un usage domestique, comprenant un évidement (8) contenant un ou plusieurs câblages électriques (15) pour l'alimentation électrique, des moyens de commande (17) pour commander l'alimentation électrique d'au moins une partie desdits un ou plusieurs câblages électriques (15), ledit contenant (2) comprenant en outre au moins une ligne d'entrée de courant électrique, ainsi qu'une ou plusieurs charges électriques (4, 5, 6, 7) connectées auxdits un ou plusieurs câblages (15) et retenus, ou intégrés, audit contenant (2), lesdites charges (4, 5, 6, 7) étant de préférence subdivisées par les moyens de commande (17) en au moins deux groupes (45, 46) de charges électriques, chaque groupe comprenant au moins une charge électrique, ledit contenant comprenant au moins une ligne sortant dudit contenant pour amener ladite au moins une charge électrique audit contenant, **caractérisé en ce que** lesdits moyens de commande (17) comprennent au moins un détecteur (17a) associé à chaque charge ou groupe de charges pour détecter le courant électrique global absorbé par ladite charge ou ledit groupe de charges, et au moins un processeur (17b) pour entraîner l'amenée de courant électrique vers au moins une desdites charges (4, 5, 6, 7), en fonction de la somme des valeurs de courant électrique détectées par ledit au moins un détecteur (17a).

2. Contenant (2) selon la revendication 1, comprenant au moins un couvercle amovible (3) pour l'évidement (8) respectif.

3. Contenant (2) selon l'une quelconque des revendications précédentes, constitué par une barre de section concave.

4. Contenant (2) selon la revendication 3, dans lequel ladite barre de section concave comprend un couvercle amovible (3) pour la protection de l'évidement (8) de ladite barre de section.

5. Contenant (2) selon l'une quelconque des revendications précédentes, dans lequel ladite au moins une ligne, sortant dudit contenant, comprend une sortie électrique (7) pour amener au moins une charge électrique à l'extérieur dudit contenant (2).

6. Système électrique (1) comprenant une pluralité de contenants (2, 202, 302) selon l'une quelconque des revendications précédentes pour loger des composants électriques, et au moins un détecteur (17a, 217a, 317a) du courant électrique absorbé individuellement par au moins une charge (4, 5, 6, 7), ou groupe de charges (45, 66) connectées à ladite au moins une charge, et au moins un processeur (17b, 217b, 317b) pour entraîner l'amenée de courant électrique vers au moins une desdites charges (4, 5, 6, 7) d'au moins un desdits contenants, en fonction de la somme des valeurs de courant électrique détectées par ledit au moins un détecteur (17a).

7. Système électrique (1) selon la revendication 6, comprenant au moins un détecteur (17a, 217a, 317a) du courant électrique absorbé individuellement par au moins une pluralité de charges, ou groupes de charges.

8. Procédé comprenant les étapes de :
a) fourniture d'un système électrique selon la revendication 6 ;
b) détection du courant électrique absorbé individuellement par une ou plusieurs desdites charges (4, 5, 6, 7), ou groupes de charges (45, 66) ;
c) définition de la priorité de charges électriques ou groupes, en fonction de la détection du courant de l'étape a) ;
d) commande de l'amenée de courant électrique parmi les charges, ou groupes de charges, en fonction de ladite priorité ;
dans lequel, pendant l'étape c) de définition des priorités, l'absorption électrique desdites charges (4, 5, 6, 7) détectées dans ladite étape b) est entrée à l'intérieur dudit processeur (17b) dudit contenant (2) dudit système électrique (1) et, en fonction de ceci, ce dernier traite ladite priorité de charge.

9. Procédé selon la revendication 8, dans lequel, pendant ladite étape d) de commande de l'amenée, ledit processeur (17b) dudit contenant (2) dudit système électrique (1) soit :
(i) entraîne l'amenée de courant électrique vers les charges avec une absorption plus élevée, jusqu'à l'atteinte d'un seuil donné ;
(ii) entraîne l'amenée de courant électrique au plus grand nombre possible de charges.
